# EUROPÄISCHE PATENTSCHRIFT

(11) **EP 0 863 335 B1**
(45) Veröffentlichungstag und Bekanntmachung des Hinweises auf die Patenterteilung: **02.06.2004**
(21) Anmeldenummer: 98103817.7
(22) Anmeldetag: 04.03.1998
(51) Int. Cl.: F16J 15/08

(54) **Metallische Flachdichtung**
Metallic gasket
Joint métallique plat

(30) Priorität: 05.03.1997 DE 19708970
(43) Veröffentlichungstag der Anmeldung: 09.09.1998
(73) Patentinhaber: REINZ-DICHTUNGS-GMBH, 89233 Neu-Ulm (DE)
(72) Erfinder: Erb, Wilfried, 89231 Neu-Ulm (DE); Unseld, Günther, 89189 Neenstetten (DE)
(74) Vertreter: Frohwitter, Bernhard, Dipl.-Ing.

(56) Entgegenhaltungen:
- DE-A- 4 421 219
- US-A- 4 964 293

## Beschreibung

Die Erfindung betrifft eine metallische Flachdichtung, insbesondere eine Zylinderkopfdichtung, gemäß Oberbegriff von Anspruch 1.

Derartige bekannte Dichtungen bestehen häufig aus mehreren laminierten Metallblechplatten, wobei um die Zylinderöffnung häufig ein Ausgleichsbereich der Dichtung vorgesehen ist, bei welchem die Summe der Dicke der verschiedenen Metallblechplatten größer ist als im restlichen Teil der Dichtung und wobei mindestens ein elastisches Außenblech mit einer nahe dem Ausgleichsbereich angeordneten Sicke vorgesehen ist.

Bekannte metallische Flachdichtungen, welche auch einlagig ausgebildet sein können, zur Zylinderkopfabdichtung oder zur Nebenabdichtung in einem Motor oder anderen Bauteilen wie z. B. Flanschen, werden heute konstruktiv unter Berücksichtigung solcher Parameter wie Ausgangsblechhärte, Sickenform und Sickenhöhe dimensioniert. Zum einen ergibt sich bei Berücksichtigung der genannten Ausgangsparameter nur eine bedingte unter anderem zeitlich relativ begrenzte Funktionstüchtigkeit der Dichtungen, und zum anderen besteht ein Widerspruch dahingehend, dass zwar bei gesteigerter Ausgangsblechhärte die Elastizität der Sicke im Ausgleichsbereich und damit die Dichtwirkung zunimmt, es erhöht sich jedoch bei gestiegener Ausgangsblechhärte das Risiko, dass bei der Herstellung der Sicke zumindest Mikrorisse auftreten, welche einen vorzeitigen Ausfall der Dichtung im Hinblick auf die thermische und mechanische Wechselbeanspruchung, welcher die Dichtung ausgesetzt ist, und damit verbundene Dauerfestigkeitsprobleme bewirken. Sollen derartige Sickenbrüche vermieden werden, so ist es erforderlich, eine geringere Ausgangsblechhärte zu wählen. Diese jedoch reduziert die Rückfederungswirkung der Sicken und schränkt somit ebenfalls die erzielbare Dichtwirkung ein.

Um diesen Widerspruch zu lösen, sind zahlreiche Sickenformen entwickelt worden, welche vor allen Dingen bei mehrlagigen Dichtungen einerseits eine gute Dichtwirkung und andererseits eine hohe Elastizität im unmittelbaren Dichtbereich gewährleisten sollen.

Aus der DE 44 21 219 A1 ist eine einstückige metallische Flachdichtung bekannt, an deren einander gegenüberliegenden Oberflächen sich in das Material der Flachdichtung eingreifende Vertiefungen befinden. Die Vertiefungen können beispielsweise die Form von Kugelabschnitten oder von geradlinig verlaufenden, nutenförmigen Prägungen haben. Die Vertiefungen können auf den einander gegenüberliegenden Oberflächen der Flachdichtung nach Form und Bemessung unterschiedlich sein. Dadurch lassen sich Flachdichtungen mit in einzelnen Bereichen gezielt einstellbaren unterschiedlichen Verformungs- und Dichtungseigenschaften herstellen; auch die Auflageflächen auf beiden Seiten der Flachdichtung können unterschiedlich sein. Damit ist in einem gewissen Umfang eine Anpassung an Gegenflächen aus unterschiedlichen Materialien möglich, zwischen denen abgedichtet werden soll, und es können unterschiedliche Anforderungen an die einzelnen Bereiche der Dichtfläche berücksichtigt werden.

Die US 4,964,293 A betrifft eine metallische Zylinderkopfdichtung, die beidseitig mit einem hitzebeständigen Kunststoff beschichtet ist und eine sicken- oder falzartige Verformung aufweist. Nach dem Einbau umgibt der Sickenbereich die Zylinderbohrung. Vor dem Gebrauch wird diese Zylinderkopfdichtung zwischen zwei Metallplatten gepresst und damit der Sickenbereich einer gezielten Verformung und einer Beanspruchung ausgesetzt, die etwa 10 bis 15 Prozent über der betrieblichen Beanspruchung liegt. Auch die Temperatur kann dabei angehoben werden, um eine Annäherung an die späteren Betriebsverhältnisse zu simulieren. Im metallurgischen Sinne handelt es sich bei dieser Vorbeanspruchung um eine Kaltverformung, die eine Vorspannung in den auf Zug beanspruchten Teilen des Sickenbereichs bewirkt. Mit dem Aufbringen einer Vorspannung durch Kaltverformung sollen diese Zylinderkopfdichtungen gleichmäßigere Abmessungen und Gebrauchseigenschaften sowie eine erhöhte Lebensdauer und Zuverlässigkeit erhalten. Diese Art der Kaltverfestigung ist naturgemäß auf den Sickenbereich beschränkt.

In der DE-OS 22 20 536 ist eine Flachdichtung beschrieben, welche im unmittelbaren Dichtbereich Sickungen bzw. Riffelungen aufweist, wobei die Dichtung aus zwei Materialschichten besteht. Eine Materialschicht ist dabei im wesentlichen flach angeordnet, und die zweite Materialschicht weist im Abdichtungsbereich die Sickungen bzw. Riffelungen auf Durch das Vorsehen der Sickung wird der gesamte, die Dichtung beaufschlagende Klemmdruck auf einen relativ kleinen Bereich konzentriert, wodurch die Dichtwirkung der Dichtung erhöht wird.

Aus der DE 94 14 941 U1 ist eine metallische Flachdichtung mit zwei gesickten Deckblechen sowie mindestens einem Zwischenblech bekannt. Zwischen den Deckblechen ist ein gekantetes Zwischenblech angeordnet, welches durch eine vorher aufgeprägte Sickung bzw. Vorkantung eine Elastizität aufweist. Durch diese Elastizität wird unter der Dichtwirkung ein ständiger Druck gegen das Deckblech erzeugt, wodurch eine akzeptable Brennraumabdichtung erreicht wird. Damit eine derartige Sicke jedoch die entsprechende Elastizität aufweist, muss die Ausgangsmaterialhärte relativ hoch sein. Dadurch ist die Herstellung der Sicke erschwert, oder es kann bei der Herstellung der Sicke, wenn die Ausgangsblechhärte zu hoch ist, im Sickenbereich eine Rissbildung auftreten.

Es ist daher die Aufgabe der Erfindung, eine metallische Flachdichtung mit sickenartigen Verformungen zu schaffen, welche eine auf Dichtbereiche abgestimmte optimale Dichtwirkung entfaltet, eine hohe Lebensdauer aufweist und eine leichte Herstellbarkeit der sickenartigen Verformungen bei reduzierter oder eliminierter Rissbildungsneigung ermöglicht.

Diese Aufgabe wird durch eine metallische Flachdichtung mit den Merkmalen gemäß Anspruch 1 sowie durch ein Verfahren zu deren Herstellung mit den Merkmalen gemäß Anspruch 16 gelöst.

Zweckmäßige Weiterbildungen sind in den jeweiligen abhängigen Ansprüchen definiert.

Gemäß der Erfindung weist die metallische Flachdichtung, welche insbesondere der Abdichtung des Zylinderkopfes von Verbrennungsmotoren dient, mit zumindest einer eine sickenartige oder falzartige Verformung aufweisenden Lage aus Metall mit einer Durchgangsöffnung, welche einen im wesentlichen dem Zylinderdurchmesser entsprechenden Durchmesser aufweist, eine sickenartige Verformung auf, welche die Durchgangsöffnung umgibt. Die metallische Flachdichtung dient dem Dichten flächiger Bauteile. Gemäß der Erfindung weist die zumindest eine Lage der Dichtung topographisch verteilte Zonen mit unterschiedlichen, die mechanischen Eigenschaften definierenden Gefügeausbildungen auf, welche durch Wärmebehandlung erzielt werden und diskret oder einander überlappend angeordnet sein können, wobei die Zonen in der Lage angeordnet sind.

Ein wesentlicher Vorteil der erfindungsgemäßen Dichtung besteht darin, dass die Zonen mit unterschiedlichen mechanischen Eigenschaften an den Stellen der Dichtung unterschiedlich gewählt werden können, welche eine optimale Dichtwirkung ermöglichen. Die Metallblechplatten bzw. die Metallblechplatte, aus welchen bzw. aus welcher die Dichtung besteht, werden an den im Sinne einer gewünschten Dichtwirkung optimalen Stellen der Dichtung an topographisch verteilten Zonen einer Gefügebehandlung unterzogen, wobei diese Gefiigebehandlung bzw. Gefügebeeinflussung entweder vor oder nach dem Sicken durchgeführt werden kann. Dadurch kann beispielsweise die Blechhärte lokal definiert zielgerichtet beeinflusst werden. Die mechanischen Eigenschaften in den topographisch verteilten Zonen werden somit zielgerichtet nicht nur durch das Gefügebehandlungsverfahren, sondern auch durch das Ausgangsmaterial der Dichtung beeinflusst. Ein weiterer wesentlicher Vorteil der erfindungsgemäßen Dichtung besteht darin, dass die Dichtung entweder im Sickenbereich oder im im Wesentlichen flach ausgebildeten Bereich der Dichtung oder in beiden an definierten Stellen mit unterschiedlichen gewünschten mechanischen Eigenschaften versehen werden kann. Dadurch ist eine volle konstruktive Freiheit bezüglich der topographischen Ausbildung der Dichtung und deren Federeigenschaften, Steifigkeit, Härte, Dauerelastizität erzielbar. Unter topographischer Ausbildung der Dichtung soll im weitesten Sinne nicht nur die Oberflächengestalt, sondern auch die lokal und/oder querschnittsbezogen unterschiedliche Ausbildung des Gefüges in den diskret verteilten Zonen mit unterschiedlichen mechanischen Eigenschaften verstanden werden. Durch eine metallische Flachdichtung gemäß der Erfindung ist es somit möglich, Zylinderkopfdichtungen z. B. für Dieselmotoren auch einlagig auszubilden.

Je nach Art der Gefügebehandlung bzw. Wärmebehandlung kann diese an der Oberfläche oder über den gesamten Querschnittsbereich der Dichtung vorgenommen werden. Dadurch ergibt sich ein weiterer wesentlicher Vorteil der erfindungsgemäßen Dichtung dahingehend, dass die Sicken bzw. sickenartigen Verformungen bezüglich ihrer Dauerelastizität (Wöhler-Kurven) gezielt einstellbar sind, indem die Sicken z. B. entweder nicht vollständig durchgehärtet sind oder beispielsweise vollständig bezüglich des Gefüges normalisiert, d.h. "durcherweicht" sind.

Gemäß einem bevorzugten Ausführungsbeispiel sind die Zonen mit unterschiedlichen mechanischen Eigenschaften auf die jeweilige Steifigkeit der flächigen Bauteile abgestimmt. So weisen vorzugsweise die Zonen mit unterschiedlichen mechanischen Eigenschaften an Stellen, an denen die flächigen Bauteile eine geringere Steifigkeit besitzen, eine größere Festigkeit als die Steifigkeit der flächigen Bauteile und an Stellen, an denen die flächigen Bauteile eine größere Steifigkeit besitzen, eine geringere Festigkeit als die Steifigkeit der flächigen Bauteile auf Die mechanischen Eigenschaften der Zonen der Dichtung können variieren hinsichtlich Federelastizität, Dauerelastizität, Härte, Steifigkeit, Festigkeit, Zähigkeit, wobei es sich versteht, dass die genannten mechanischen Eigenschaften untereinander abhängig sind.

Insbesondere weisen gemäß einem bevorzugten Ausführungsbeispiel der Erfindung die Zonen unterschiedliche Härten auf. Die Dichtung ist dabei vorzugsweise so ausgebildet, dass im Verlauf einer Sicke, z.B. um die für einen Zylinder vorgesehene Durchgangsöffnung herum, die Härte an verschiedenen Stellen unterschiedlich ist. An Stellen, an denen die Bauteile weicher sind, ist die Sicke vorzugsweise härter ausgebildet. Bei Mehrzylinderanordnungen sind im Stegbereich zwischen den Zylindern, in welchen mehrere Sicken relativ dicht nebeneinander angeordnet sind, Härte und Federeigenschaften der Sicke vorzugsweise reduziert, so dass die Dichtkraftwirkung im Umfang um die Durchgangsöffnung um den Zylinderraum relativ ausgeglichen ist. Dadurch ist es möglich, eine gleichmäßigere Krafteinleitung in die die Dichtung umgebenden abzudichtenden Bauteilen zu realisieren.

Gemäß einem weiteren bevorzugten Ausführungsbeispiel ist die Dichtung einlagig ausgebildet. Bei einer einlagig ausgebildeten Dichtung kann bei geeigneter Wahl des Ausgangsmaterials ein Bereich der Sicke oder die gesamte Sicke mit einer größeren Härte ausgebildet sein als an den im wesentlichen flach ausgebildeten anderen Bereichen der Dichtung. Es ist jedoch auch möglich, je nach mechanischen Eigenschaften der zu dichtenden Bauteile, die Dichtung in dem im wesentlichen flach ausgebildeten Bereich ebenfalls mit topographisch verteilten Zonen unterschiedlicher mechanischer Eigenschaften zu versehen. Damit kann auch eine einlagige Dichtung in optimaler Weise bezüglich Form und lokaler mechanischer Eigenschaften auf die Dichtungsbedingungen konstruktiv ausgelegt bzw. eingestellt werden.

Gemäß einem weiteren bevorzugten Ausführungsbeispiel besteht die Dichtung aus einem Laminat aus Lagen verschiedener Metallblechplatten. Zumindest eine der Metallblechplatten weist Zonen mit unterschiedlichen mechanischen Eigenschaften auf. Es ist jedoch auch möglich, dass mehrere oder sämtliche, das Laminat bildende Metallblechplatten derartige Zonen mit unterschiedlichen mechanischen Eigenschaften aufweisen. Die Zonen mit unterschiedlichen mechanischen Eigenschaften können vorzugsweise dabei so angeordnet sein, dass die einzelnen Lagen der Metallblechplatten jeweils an unterschiedlichen Stellen derartige topographisch verteilte Zonen mit unterschiedlichen mechanischen Eigenschaften aufweisen, so dass für die gesamte Dichtung optimale mechanische Eigenschaften an den gewünschten Bereichen bestehen.

Gemäß einem weiteren bevorzugten Ausführungsbeispiel sind die Zonen mit unterschiedlichen mechanischen Eigenschaften vorzugsweise im Bereich der sickenartigen Verformung vorgesehen. Dadurch kann der Sicke die für die Dichtwirkung erforderliche hohe Elastizität verliehen werden, ohne dass die erforderliche Weichheit an den Brückenstellen der Dichtung nachteilig beeinflusst wird. Durch Auswahl eines Metallbleches mit weicherer Ausgangshärte vor dem Sicken ist es somit möglich, ein rissfreies Sicken zu realisieren, wobei durch eine entsprechende Gefügenachbehandlung die Sicke auf eine gewünschte Endhärte bzw. Endfestigkeit einstellbar ist. Es ist jedoch auch möglich, ein Metallblech mit relativ harter Ausgangshärte auszuwählen, wobei zum rissfreien Sicken der Bereich der Sicke partiell normalisiert, d. h. "erweicht" wird und nach dem Sicken im Sickenbereich die gewünschte Soll-Endhärte der Sicke einschließlich deren Umgebung definitiv eingestellt wird.

Je nach Anwendungsfall sind die Zonen mit unterschiedlichen mechanischen Eigenschaften entweder im Oberflächenbereich der Dichtung oder im gesamten Querschnittsbereich der Dichtung ausgebildet. Für definierte Anwendungsfälle bietet die Gefügebeeinftussung in den diskreten Zonen im Oberflächenbereich den Vorteil, dass eine gewünschte Elastizität der Sicke erzielbar ist und die Sicke dennoch in den Dichtungskörper einformbar ist, ohne dass eine starke Rissbildungsneigung vorhanden ist.

Gemäß einem weiteren bevorzugten Ausführungsbeispiel ist die sickenartige Verformung entweder als Einfachsicke ausgebildet oder als Doppelsicke, Umbördelung oder als eine Kombination daraus. Die Art der Sicke der Dichtung richtet sich einerseits nach der zu erzielenden Dichtkraft und wird andererseits durch das Material sowie das verhandlungsverfahrensabhängige Gefüge beeinflusst.

Vorzugsweise weisen bei einer mehrlagigen Dichtung die Innenlagen parallel zu den Außenlagen Bereiche höherer und niedrigerer Festigkeit der sickenartigen Verformung auf. Dadurch können beispielsweise Krafteinleitung und Dichtungwirkung positiv beeinflusst werden.

Gemäß einem weiteren bevorzugten Ausführungsbeispiel ist es jedoch auch möglich, dass bei einer mehrlagigen Dichtung die Innenlagen der sickenartigen Verformung Bereiche höherer und niedrigerer Festigkeit aufweisen, deren Festigkeit gleichmäßig oder gestuft zu den Festigkeiten von Außenlagen übergeht. Die unterschiedliche Wahl von Zonen oder Bereichen unterschiedlicher mechanischer Eigenschaften bei Innenlagen und Außenlagen einer mehrlagigen Dichtung dient der Erzielung optimaler Dichtungseigenschaften der gesamten Paketdichtung.

Um optimale Dichtwirkungen in Verbindung mit optimal ausgeglichenen, in die abzudichtenden Bauteile eingeleiteten Kräften zu erzielen, ist der Werkstoff der Dichtung aus der Gruppe Kohlenstoffstahl, ferritischer Edelstahl, austenitischer Edelstahl, teilferritischer/austenitischer Edelstahl, Nichteisenmetall, gesintertes Material, pulvermetallisches Material oder beschichtetes Metall ausgewählt. Es ist jedoch auch möglich, die Flachdichtung aus Kunststoff oder aus einem keramischen Material auszubilden, wobei durch entsprechende Gefügebehandlung gleichermaßen topographisch verteilte Zonen mit unterschiedlichen mechanischen Eigenschaften erzielbar sind. Der wesentliche Vorteil der erfindungsgemäßen Dichtung besteht u.a. auch darin, dass durch eine gezielte Werkstoffauswahl eine gewünschte Soll-Härte bzw. Soll-Festigkeit vorauswählbar ist. Denn das Ausgangsmaterial liefert nach entsprechender Gefügebehandlung in Verbindung mit einer definierten ausgewählten Gefügebehandlung die Möglichkeit, gewünschte Soll-Endhärten bzw. Soll-Endfestigkeiten gezielt an bestimmten Zonen der Dichtung einzustellen.

Gemäß einem weiteren Aspekt der Erfindung wird bei dem erfindungsgemäßen Verfahren zur Herstellung einer metallischen Flachdichtung die mindestens eine Metallage, aus welcher die Dichtung besteht, in topographisch verteilten Zonen thermisch behandelt. Durch eine thermische Behandlung einzelner oder sich überlagender Zonen der Dichtung werden der Dichtung somit Bereiche unterschiedlicher mechanischer Eigenschaften verliehen.

Vorzugsweise wird der Dichtung vor einem Sicken durch die thermische Behandlung im Bereich der Sicken eine geringere Festigkeit bzw. Härte verliehen, so dass ein im wesentlichen rissfreies Einformen der Sicken möglich ist. Dies wird vor allen Dingen dann angewendet, wenn das Ausgangsmaterial eine relativ große Härte aufweist. Vorzugsweise wird nach dem Einformen der Sicke in die Dichtung der Sickenbereich anschließend thermisch nachbehandelt, um eine gewünschte Soll-Endhärte bzw. Soll-Endfestigkeit einzustellen, damit die Sicke die gewünschte Elastizität aufweist. Das bevorzugte Verfahren zur thermischen Behandlung topographisch verteilter Zonen der Dichtung zur Erzielung von Gefügeänderungen ist das Härten.

Gemäß noch einem weiteren bevorzugten Ausführungsbeispiel der Erfindung sind die einzelnen Zonen thermisch unterschiedlich behandelt, so dass die Dichtung an unterschiedlichen Stellen unterschiedliche mechanische Eigenschaften, insbesondere eine unterschiedliche Härte aufweist. Die unterschiedlichen mechanischen Eigenschaften in den verschiedenen Zonen sind dabei vorzugsweise so ausgewählt, dass eine optimale Abstimmung auf die Oberflächenhärte und/oder die Steifigkeit der die Dichtung umgebenden, mit der Dichtung abzudichtenden Bauteile erfolgt. Dadurch kann sowohl der Konstruktion der abzudichtenden Bauteile als auch deren Material und Materialeigenschaften entsprochen werden und die Dichtung optimal darauf eingestellt werden. Darüber hinaus ist es möglich, mit ein und demselben prinzipiellen Grundaufbau durch die Wahl geänderter Zonen unterschiedlicher mechanischer Eigenschaften unterschiedliche Dichtungswirkungen zu erzielen. Dadurch ist eine zumindest teilweise Typisierung möglich, so dass ein prinzipieller Dichtungsaufbau Anwendungen für zahlreiche Dichtungsfälle ermöglicht.

Gemäß einem weiteren bevorzugten Ausführungsbeispiel ist die Dichtung mindestens zweifach gesickt oder gebördelt, wobei eine erste innenliegende Sicke eine aufgehärtete Zone aufweist, welche durch ein entsprechend weicheres Material umgeben ist, welches eine zweite Sicke aufweist. Diese zweite Sicke ist bezüglich der Durchgangsöffnung hinter der ersten Sicke angeordnet und ist in den entsprechenden topographisch verteilten Zonen so aufgehärtet, dass eine gewünschte Federelastizität erzielt wird.

Durch das abwechselnde Anordnen von Zonen unterschiedlicher mechanischer Eigenschaften im Bereich der Sicke oder in dem die Sicke umgebenden Bereich wird gemäß der Erfindung die Herstellung einer Dichtung mit optimalen Dichtungseigenschaften ermöglicht. Vorzugsweise ist die Dichtung nur im Bereich der Durchgangsöffnung thermisch behandelt.

Vorzugsweise werden die topographisch verteilten Zonen mit mechanischen Eigenschaften mittels eines Lasers thermisch behandelt. Gemäß einem weiteren bevorzugten Ausführungsbeispiel werden die Zonen mit unterschiedlichen mechanischen Eigenschaften mit induktiv arbeitenden und/oder auf Basis von Mikrowellen, Elektronenstrahlen und/oder elektromagnetischen Strahlen arbeitenden Mitteln thermisch behandelt. Je nach Wärmebeeinflussbarkeit bzw. Beeinflussbarkeit der Gefügeänderung der verschiedenen Werkstoffe und in Abhängigkeit von der Dicke des jeweiligen Werkstoffes und in Abhängigkeit davon, ob eine Behandlung im Oberflächenbereich oder im gesamten Querschnittsbereich erzielt werden soll, wird die Auswahl des jeweiligen Behandlungsverfahrens vorgenommen, so dass die gewünschten mechanischen Eigenschaften in den Zonen nicht nur über die obengenannten Materialeigenschaften, sondern auch durch die Wahl eines geeigneten Behandlungsverfahrens beeinflusst werden.

Weitere Vorteile, Merkmale und Anwendungsmöglichkeiten der vorliegenden Erfindung werden nun an Hand von weiteren Ausführungsbeispielen unter Bezugnahme auf die beigefügten Zeichnungen detailliert erläutert.

Es zeigen:
- Fig. 1A - J: Ausführungsbeispiele für einlagige Dichtungen gemäß der Erfindung;
- Fig. 2A - G: Ausführungsbeispiele von einlagigen und mehrlagigen Dichtungen gemäß der Erfindung;
- Fig. 3A - D: weitere Ausführungsbeispiele von mehrlagigen Dichtungen gemäß der Erfindung;
- Fig. 4A, B: Draufsichten in perspektivischer Ansicht von Dichtungen gemäß der Erfindung für einen Zweizylinder-Motor;
- Fig. 5: Beispiele der Ausbildung der Zone mit unterschiedlichen mechanischen Eigenschaften im Hinblick auf den Querschnitt des Dichtungsmaterials.

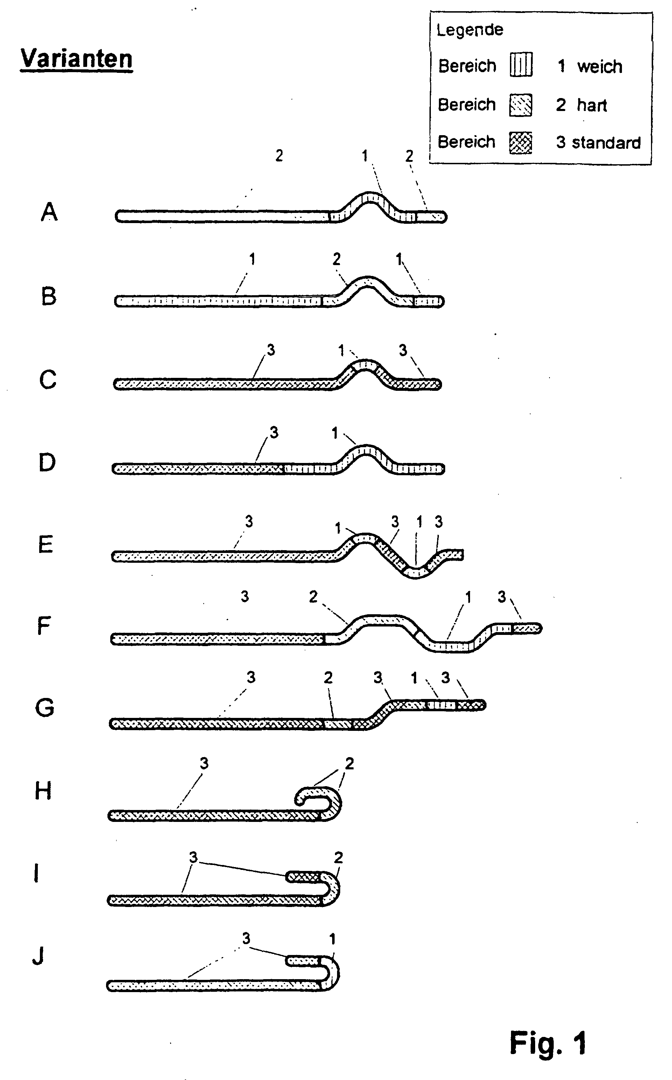

Fig. 1 zeigt Ausführungsbeispiele für einlagige Dichtungen gemäß der Erfindung, welche an verschiedenen Bereichen, d.h. topographisch verteilt, Zonen 1 bis 3 mit unterschiedlichen mechanischen Eigenschaften ausweist. Hierbei kennzeichnet die Ziffer 1 stets eine Zone mit der Gefügeausbildung "weich", die Ziffer 2 eine Zone mit der Gefügeausbildung "hart" und die Ziffer 3 eine Zone mit der Gefügeausbildung "Standard".

Fig. 1A ist eine prinzipielle Querschnittsdarstellung einer einlagigen Dichtung mit einer im Bereich der Durchgangsöffnung der Dichtung angeordneten Sicke. Der eigentliche Bereich der sickenartigen Verformung ist weich ausgeführt (Zone 1), woran sich jeweils harte bzw. gehärtete Bereiche (Zone 2) der Dichtung anschließen. Eine derartige Dichtung kann beispielsweise aus einem harten oder gehärteten Grundmaterial bestehen, welches im Bereich der Sicke normalisiert wurde, so dass die Sicke aus einem weichen Material besteht und leicht in die Sickenform geformt werden kann, ohne dass die Gefahr einer Rissbildung infolge Verformung auftritt.

In Fig. 1B ist im Querschnitt eine einlagige Dichtung gemäß Fig. 1A dargestellt, bei welcher jedoch der Bereich der sickenartigen Verformung als Zone 2, d.h. hart bzw. gehärtet ausgebildet ist, woran sich zu beiden Seiten jeweils normalisierte bzw. weiche Bereiche als Zone 1 anschließen. Somit weist eine derartige Dichtung zwei topographisch verteilte Zonen 1, 2 mit unterschiedlichen mechanischen Eigenschaften auf. Eine solche Dichtung wird vorzugsweise aus einem normalisierten Material hergestellt, wobei in einem ersten Verfahrensschritt die Sicke ausgeformt wird, welche in einem zweiten Verfahrensschritt gefüge-behandelt wird, um dem Bereich der sickenartigen Verformung eine größere Härte (Zone 2) zu verleihen. Eine Sicke mit einer größeren Härte hat den Vorteil, dass ihre für die Dichtfunktion notwendigen Elastizitätseigenschaften ausgeprägter sind.

In Fig. 1C ist ein weiteres Ausführungsbeispiel einer einlagigen Dichtung gemäß Fig. 1A dargestellt. Bei diesem Ausführungsbeispiel besteht die Dichtung aus einem Standard-Grundmaterial und damit der Zone 3. Die Dichtung weist ebenfalls eine sickenartige Verformung im Bereich der Durchgangsöffnung der Dichtung auf. Ein Teil der sickenartigen Verformung ist als ein normalisierter bzw. weicher Bereich, d.h. als Zone 1 ausgebildet. Dieser obere Krümmungsbereich der Sicke unterliegt während des Verformungsvorganges den höchsten Biegekräften und damit der höchsten Neigung nach einer Rissbildung. Auch Mikrorisse, welche sich während des Verformungsprozesses ausbilden und zunächst äußerlich nicht sichtbar sind, können auftreten und das spätere Langzeitverhalten einer im Einsatz befindlichen Dichtung nachteilig beeinflussen. Aus diesem Grunde ist dieser Bereich der sickenartigen Verformung als relativ weicher Bereich (Zone 1) ausgebildet. Zwar ist dadurch die Elastizität der sickenartigen Verformung begrenzt, für moderate Belastungen sind derartige Dichtungen jedoch durchaus erfolgreich einsetzbar.

In Fig. 1D ist eine weitere einlagige Dichtung gemäß Fig. 1A dargestellt, welche ebenfalls im flach ausgeführten Teil einen Bereich aus Standardmaterial, d.h. als Zone 3 aufweist und welche eine normalisierte bzw. weich ausgeführte Sicke (Zone 1) einschließlich deren Randbereiche aufweist. Da bei diesem Ausführungsbeispiel der gesamte Bereich der sickenartigen Verformung weich ausgebildet ist, ergibt sich eine gute Ausformbarkeit der Sicke, ohne dass die Gefahr einer Rissbildung auftritt. Die elastischen Eigenschaften einer derartigen Sicke sind jedoch begrenzt.

Fig. 1E zeigt ein weiteres Beispiel einer einlagigen Dichtung, welche eine phasenversetzte Doppelsicke im Bereich der Durchgangsöffnung der Dichtung aufweist. Der Grundkörper der Dichtung besteht wiederum aus einem Standardmaterial, d.h. als Zone 3, wobei lediglich die am stärksten verformten Bereiche der Sicke normalisiert bzw. weich ausgebildet sind, also als Zone 2, analog zu Fig. 1C. Durch die Doppelsicke werden die elastischen Eigenschaften der sickenartigen Verformung im Bereich der Durchgangsöffnung erhöht, wobei gleichzeitig die Vorteile der rissbildungsfreien Verformung im Bereich der größten Verformung der Sicke gewährleistet bleiben.

In Fig. 1F ist eine weitere einlagige Dichtung mit einer Doppelsicke im Bereich der Durchgangsöffnung der Dichtung ausgebildet. Die Doppelsicke ist wiederum analog zu Fig. 1E phasenversetzt angeordnet, d.h. eine Sicke öffnet nach unten, während die benachbarte Sicke nach oben öffnet. Die sickenartigen Verformungen sind im Querschnitt im wesentlichen trapezförmig. Während der Grundkörper der Dichtung wiederum aus einem Standardmaterial (Zone 3) besteht, ist die der Durchgangsöffnung am nächsten liegende Sicke aus normalisiertem bzw. weichem Material (Zone 1) und die daneben liegende zweite Sicke aus hartem bzw. gehärtetem Material (Zone 2) ausgebildet Eine derartige Dichtung wird beispielsweise so hergestellt, dass in einem ersten Verfahrensschritt der in Sicken zu formende Bereich normalisiert wird, anschließend die Sicken ausgeformt werden und danach die am weitesten von der Durchgangsöffnung entfernt liegende Sicke gehärtet wird.

In Fig. 1G ist ein weiteres Ausführungsbeispiel einer einlagigen Dichtung mit Zonen mit unterschiedlichen mechanischen Eigenschaften dargestellt Im Bereich der Durchgangsöffnung weist die Sicke einen halbsickenartigen Versatz auf, welcher der aus einem Standardmaterial im Sinne der Zone 3 bestehenden Dichtung eine gewisse Elastizität verleiht. Im Abschnitt der Dichtung zwischen der Sicke und der Durchgangsöffnung ist ein Bereich aus normalisiertem bzw. weichem Material (Zone 1) ausgebildet, während in dem Bereich zwischen der Sicke und dem Außenrand der Dichtung eine Zone 2 mit größerer Härte angeordnet ist. Die Sicke besitzt also im Sinne einer Härtebeeinflussung Zonen mit unterschiedlichen mechanischen Eigenschaften neben der Sicke.

In Fig. 1H ist eine einlagige Dichtung gemäß einem weiteren Ausführungsbeispiel der Erfindung dargestellt, welche aus einem Standardmaterial im Sinne der Zone 3 besteht, dessen der Durchgangsöffnung zugewandtes Ende umgebördelt ist, wodurch dieser Bereich der Dichtung im Querschnitt hakenartig ausgebildet ist. Der Bereich des "Hakens" der Dichtung ist aus einem gehärteten Abschnitt als Zone 2 ausgebildet, so dass ein, bezogen auf die Gesamtdichtung, teilgehärtetes Federelement im unmittelbaren Dichtungsbereich um die Durchgangsöffnung der Dichtung herum ausgebildet ist. Zweckmäßigerweise wird der "Haken" bei unbehandeltem Standardmaterial (Zone 3) ausgeformt und wird nach Ausbildung des "Hakens" in die gewünschte End-Härte gebracht.

Fig. 11 ist ebenfalls als eine umgebördelte Halbsicke dargestellt, wobei der umgebördelte Bereich auf den eigentlichen Dichtungskörper unter Belassung eines Zwischenraumes zurückgefaltet ist. Ein durch die Umbördelung entstehender halbkreisförmiger Bereich, welcher bei der Umbördelung am stärksten verformt ist und die kritische Biegezone darstellt, ist als gehärtete Zone 2 ausgebildet, um der hakenartigen Umbördelung eine entsprechende Federsteifigkeit zu verleihen. Vorzugsweise ist die aus einem harten Materialabschnitt bestehende Zone 2 nach dem Umbiegen durch Gefügebehandlung des entsprechenden Materials auf die gewünschte Soll-Endhärte eingestellt.

Fig. 1J zeigt den Querschnitt einer Dichtung eines weiteren Ausführungsbeispiels, deren prinzipielle Form der in Fig. 1I dargestellten entspricht, bei welcher jedoch die kritische Biegezone als eine Zone 1 aus einem weichen Materialabschnitt ausgebildet ist. Eine derartige Dichtung wird vor allen Dingen dann eingesetzt, wenn keine hohen Elastizitätsanforderungen an den Sickenbereich gestellt werden, wenn andererseits jedoch beim Umbiegen der hakenartigen Bördelung eine Rissbildung unbedingt vermieden werden soll.

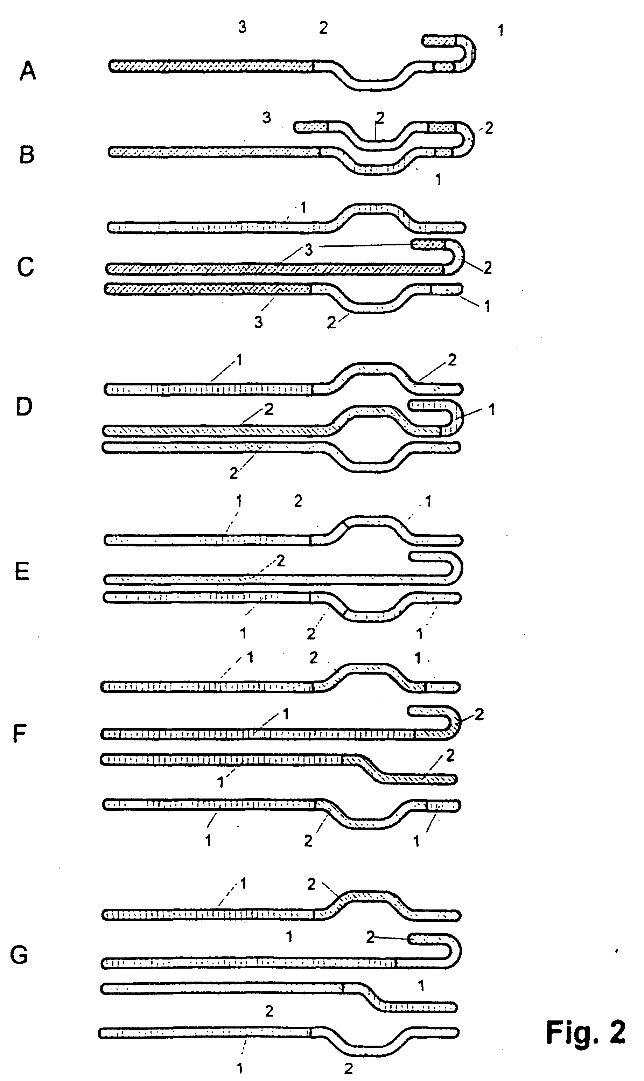

In Fig. 2A ist eine einlagige Dichtung gemäß einem weiteren Ausführungsbeispiel der Erfindung dargestellt. Auch hier gilt die eingangs schon eingeführte Benennung der Zonen, nämlich 1 für weich, 2 für hart und 3 für Standard. Die Dichtung besteht aus einem Standardmaterial mit der Zone 3 und weist eine sickenartige Verformung sowie eine in unmittelbarer Nähe der Durchgangsöffnung der Dichtung angeordnete hakenartige Umbördelung auf. Die sickenartige Verformung ist trapezförmig und aus einem harten bzw. gehärteten Material, also als Zone 2 ausgebildet. Darüber hinaus ist die kritische Biegezone (siehe Fig. 1J) ebenfalls als eine Zone 1 mit weichen Eigenschaften ausgebildet. Vorzugsweise wird die Behandlung, durch welche eine Aufhärtung der beschriebenen Bereiche der Dichtung erzielt wird, nach dem Ausformen der Verformungsbereiche erzeugt. Eine derartige Dichtung besitzt den Vorteil einer hohen Elastizität im unmittelbaren Dichtungsbereich.

In Fig. 2B ist eine prinzipiell einlagige Dichtung aus einem Standardmaterial als Zone 3 dargestellt, welche jedoch einen relativ weit in den flachen Bereich der Dichtung geführten zurückgefalteten Teil aufweist. Durch diesen weit in Richtung auf den flachen Teil der Dichtung zurückgefalteten Teil ist im eigentlichen Dichtungsbereich die Dichtung zweilagig ausgebildet. Beide übereinanderliegenden Bereiche, d.h. der zurückgefaltete Teil des Dichtungsmaterials sowie der diesem zurückgefalteten Teil gegenüberliegende Teil des Dichtungsmaterials weisen phasengleich eine im wesentlichen trapezförmig ausgebildete Sicke auf Die im zurückgefalteten Teil in der Dichtung vorgesehene Sicke ist als eine Zone 2 mit hartem Material ausgebildet, während die darunter angeordnete Sicke aus einer Zone 1 mit weichem Material ausgebildet ist. Die kritische Biegezone ist analog zu der Fig. 1I ebenfalls als eine Zone 2 gehärteten Materials ausgebildet. Durch die Kombination von Standardmaterial, Zone 1 aus weichem Material und Zone 2 aus gehärtetem Material wird eine Kombination von Federsteifigkeit, leichter Verformbarkeit und genereller Festigkeit in Verbindung mit an zahlreiche Belastungsbedingungen angepasste Dichtkapazität ermöglicht. Vorzugsweise sind die Zonen unterschiedlicher mechanischer Eigenschaften 1 bzw. 2 dem Standardmaterial der Zone 3 der Dichtung nach deren Ausformen aufgeprägt.

In Fig. 2C ist eine dreilagige Dichtung ausgebildet. Die obere Lage ist aus weichem Material als Zone 1 hergestellt, während die mittlere Lage aus einem Standardmaterial als Zone 3 ausgebildet ist und in ihrer Form der einlagigen Dichtung gemäß Fig. 1I entspricht. Die untere Lage ist ebenfalls aus Standardmaterial als Zone 3 hergestellt und besitzt eine aus einem harten bzw. gehärteten Material ausgebildete im wesentlichen trapezförmige Sicke, welche spiegelsymmetrisch zu einer ebenfalls trapezförmig ausgebildeten Sicke in der Oberlage angeordnet ist. Der unmittelbare Bereich, welcher der Durchgangsöffnung der Dichtung zugewandt ist, ist bei der unteren Lage ebenfalls aus weichem bzw. normalisiertem Material der Zone 1 ausgebildet. Durch die Kombination von Sicken und hakenartig ausgebildeter Mittellage sowie Normalmaterial und gehärteten Zonen wird eine optimale Anpassung der Dichtung an unterschiedliche Dichtungsanforderungen im Betrieb in Verbindung mit einer relativ hohen Federelastizität im eigentlichen Dichtungsbereich erzielt.

In Fig. 2D ist eine ebenfalls dreilagige Dichtung gemäß einem weiteren Ausführungsbeispiel der Erfindung dargestellt. Im prinzipiellen Aufbau entspricht diese dreilagige Sicke dem Aufbau gemäß Fig. 2C mit dem Unterschied, dass die Mittellage im Bereich der symmetrisch gegenüberliegenden Sicken der Ober- und der Unterlage ebenfalls eine Sicke aufweist, welche ebenfalls im wesentlichen trapezförmig ausgebildet ist und phasenmäßig gleich zu der in der Oberlage ausgebildeten Sicke angeordnet ist. Der flache Bereich der Oberlage und die hakenartige Umbördelung der Mittellage sind jeweils aus weichem bzw. normalisiertem Material im Sinne der Zone 1 ausgebildet, während alle anderen Bereiche der Oberlage, der Mittellage und der Unterlage aus gehärtetem Material, also der Zone 2 bestehen. Eine derartige Dichtung ist für Anwendungsfälle gedacht, bei welchen insbesondere die Elastizitätseigenschaften für eine zuverlässige und langlebige Dichtung von Bedeutung sind.

In Fig. 2E ist ebenfalls eine dreilagige Dichtung dargestellt, deren prinzipieller Aufbau dem der Fig. 2C entspricht. Die Oberlage und die Unterlage weisen in dem der Durchgangsöffnung der Dichtung abgewandten Bereich der Sicke im Übergangsbereich zum flachen Teil der Dichtung eine gehärtete Zone 2 auf. Der übrige Teil der Lagen ist aus weichem bzw. normalisiertem Material der Zone 1 ausgebildet. Die Mittellage besteht vollkommen aus gehärtetem bzw. hartem Material der Zone 2. Vorzugsweise werden auch bei diesem Ausführungsbeispiel die gehärteten Bereiche nach dem Verformen und nach dem Normalisieren an den beschriebenen Stellen der Dichtung erzeugt.

In Fig. 2F ist eine vierlagige Dichtung dargestellt, welche eine Oberlage mit einer trapezförmig ausgebildeten Sicke mit einer Zone 2 mit aufgehärtetem Bereich, eine erste Mittellage in der Form der Mittellage gemäß Fig. 2E, bei welcher jedoch lediglich der hakenförmig umgebördelte Bereich aus gehärtetem Material der Zone 2 ausgebildet ist, eine zweite Mittellage, welche im Bereich der Durchgangsöffnung eine halbsickenartige Stufung aufweist, wobei die halbsickenartige Stufung einschließlich der benachbarten Bereiche als Zone aus einem gehärteten bzw. hartem Material der Zone 2 besteht, und die Unterlage mit einer entgegengesetzt öffnenden trapezförmigen Sicke im Bereich der trapezförmigen Sicke der Oberlage aufweist, welche als eine Zone 2 aus gehärtetem bzw. hartem Material besteht. Der unmittelbar der Durchgangsöffnung der Dichtung zugewandte Teil der unteren Lage sowie alle anderen nicht aufgeführten Teile der einzelnen Lagen bestehen aus Zonen 1 aus weichem Material.

In Fig. 2G ist eine vierlagige Dichtung gemäß einem weiteren Ausführungsbeispiel der Erfindung beschrieben, welche in ihrem prinzipiellen Aufbau der Dichtung gemäß Fig. 2F entspricht, welche jedoch demgegenüber andere Zonen 2 mit härterem Material aufweisen. Die Oberlage weist eine Zone 2 gehärteten Materials auf, welche den Sickenbereich sowie den Bereich bis unmittelbar an die Durchgangsöffnung der Dichtung umfasst. Die erste Mittellage entspricht in ihrer Ausbildung der ersten Mittellage gemäß Fig. 2F. Die geometrische Form der zweiten Mittellage ist ebenfalls identisch zu der gemäß Fig. 2F, wobei diese zweite Mittellage eine den Bereich der Halbsicke und den Bereich unmittelbar neben der Durchgangsöffnung umfassende Zone 1 aus weichem Material und eine im wesentlichen den flachen gestreckten Bereich umfassende Zone 2 aus gehärtetem Material aufweist. Die untere Lage entspricht ebenfalls der unteren Lage gemäß Fig. 2F mit dem Unterschied, dass der unmittelbar neben der Durchgangsöffnung der Dichtung liegende Bereich ebenfalls zu der Zone 2 der Sicke aus gehärtetem Material gehört.

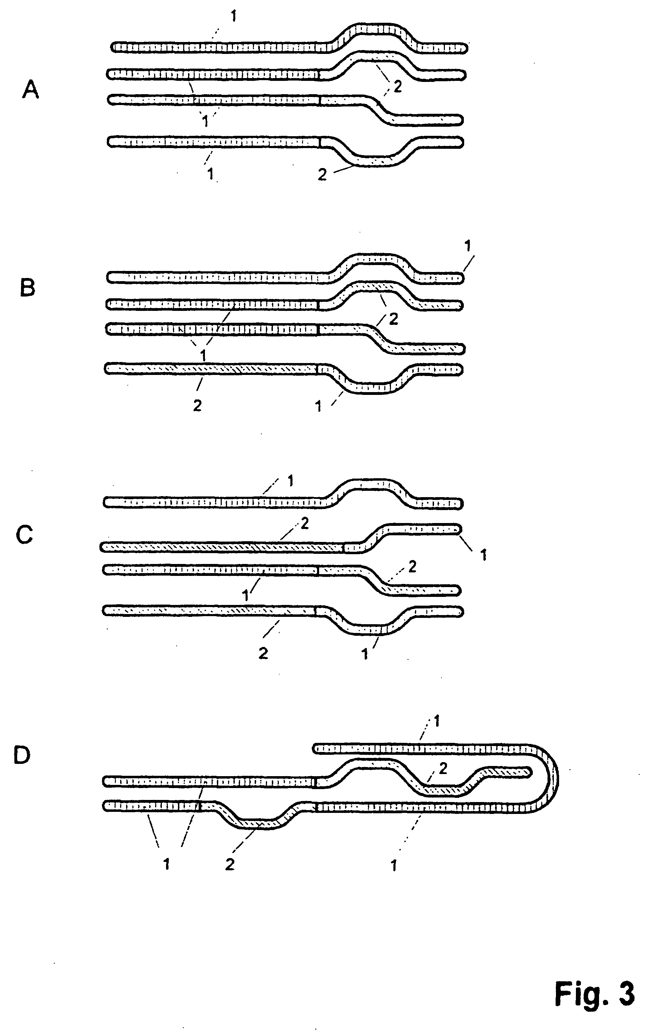

Fig. 3A zeigt ein weiteres Ausführungsbeispiel einer vierlagig ausgebildeten Dichtung gemäß der Erfindung. Bei diesem Ausführungsbeispiel weist die Dichtung eine weiche obere Lage mit einer trapezförmig ausgebildeten Sicke im Bereich der Durchgangsöffnung der Dichtung auf. Eine erste Mittellage ist formkongruent zu der ersten Oberlage ausgebildet. Die zweite Mittellage entspricht der zweiten Mittellage gemäß Fig. 2F. Und die Unterlage entspricht der Unterlage gemäß Fig. 2G. Die drei unteren Lagen besitzen eine den gesamten Bereich der Sicke umfassende Zone 2 aus hartem bzw. gehärtetem Material sowie eine den flachen Bereich der Dichtung umfassende jeweilige Zone 1 aus normalisiertem bzw. weichem Material. Eine derartige Dichtung weist vor allen Dingen im unmittelbaren Bereich der Sicke, d.h. in dem Bereich, in welchem die unmittelbare Dichtwirkung von der Dichtung entfaltet wird, eine hohe Federsteifigkeit auf.

In Fig. 3B ist ein weiteres Ausführungsbeispiel einer vierlagig ausgeführten Dichtung gemäß der Erfindung dargestellt. Die geometrische Form der einzelnen Lagen entspricht prinzipiell der gemäß Fig. 3A. Die einzelnen Zonen mit unterschiedlichen mechanischen Eigenschaften unterscheiden sich jedoch von denen gemäß Fig. 3A. Die Oberlage ist durchgängig aus einem weichen Material ausgebildet. Die Aufteilung der Zonen der ersten und der zweiten Mittellage entsprechen denen gemäß Fig. 3A. Die Zonenaufteilung der Unterlage ist bezüglich der Zonenaufteilung gemäß Fig. 3A umgekehrt, d.h. der Bereich der Sicke und der Bereich der Durchgangsöffnung der Dichtung sind als Zone 1 aus weichem Material ausgebildet, während der ebene Bereich der unteren Lage als gehärteter Bereich, also als Zone 2, ausgebildet ist. Eine derartige Dichtung kann beispielsweise eingesetzt werden, wenn der im Bereich der Sicken der einzelnen Lagen befindliche Teil der abzudichtenden Bauteile eine relativ geringe Festigkeit aufweist.

Fig. 3C zeigt ein weiteres Ausführungsbeispiel einer vierlagig ausgebildeten Dichtung gemäß der Erfindung. Die Oberlage ist analog zu der Oberlage gemäß Fig. 3B ausgebildet. Die beiden Mittellagen weisen jeweils im wesentlichen in der Mitte der trapezförmig ausgebildeten Sicke der Ober- und Unterlage eine halbsickenartige Stufung auf, welche jedoch phasenversetzt zueinander angeordnet sind, so dass die beiden Mittellagen eine gabelförmige Anordnung bilden. Die erste Mittellage weist eine Zone 1 aus weichem Material auf, welche den Sickenbereich und den unmittelbar an die Durchgangsöffnung angrenzenden Bereich umfasst, wohingegen ihr den flachen Bereich der Dichtung umfassender Teil eine Zone 2 aus hartem Material darstellt. Die zweite Mittellage weist entgegengesetzt dazu angeordnete Zonen mit unterschiedlichen Materialeigenschaften auf, wobei der den Sickenbereich umfassende und der Bereich unmittelbar neben der Durchgangsöffnung als Zone 2 aus hartem Material überlappend zu der Zone 2 aus hartem Material der ersten Mittellage ausgebildet ist. Die Unterlage ist analog zu der gemäß Fig. 3B dargestellten ausgebildet.

Fig. 3D stellt ein weiteres Ausführungsbeispiel einer Dichtung gemäß der Erfindung dar. Diese Dichtung weist eine erste Lage auf, welche einen flachen Abschnitt aus weichem Material der Zone 1 und einen Abschnitt mit einer Doppelsicke als Zone 2 aus einem harten Material besitzt. Der Bereich der Doppelsicke ist dabei vollständig als Zone 2 aus hartem bzw. gehärtetem Material ausgebildet. Die zweite Lage weist im Bereich des flachen Abschnittes der ersten Lage eine trapezförmig ausgebildete Sicke als Zone 2 aus hartem bzw. gehärtetem Material auf, woran sich in Richtung auf den eine Doppelsicke aufweisenden Bereich der ersten Lage ein flacher Abschnitt ebenfalls mit der Zone 1 aus weichem Material anschließt, welcher über eine kreisbogenförmige Umlenkung über den eine Doppelsicke aufweisenden Abschnitt der ersten Lage als Schenkel geklappt ist Der Schenkel besteht ebenfalls aus weichem Material der Zone 1, so dass im Bereich der Doppelsicke der ersten Lage eine dreilagige Dichtung entsteht. Bei einer Dichtung gemäß diesem Ausführungsbeispiel entsprechend Fig. 3D sind somit weiche Materialabschnitte jeweils mit hartem, eine entsprechend hohe Federelastizität aufweisenden Abschnitten gepaart, so dass an allen Bereichen der Dichtung die erforderliche Weichheit zum Anlegen an die abzudichtenden Bauteile in Verbindung mit der für die Dichtwirkung notwendigen Federelastizität gegeben sind.

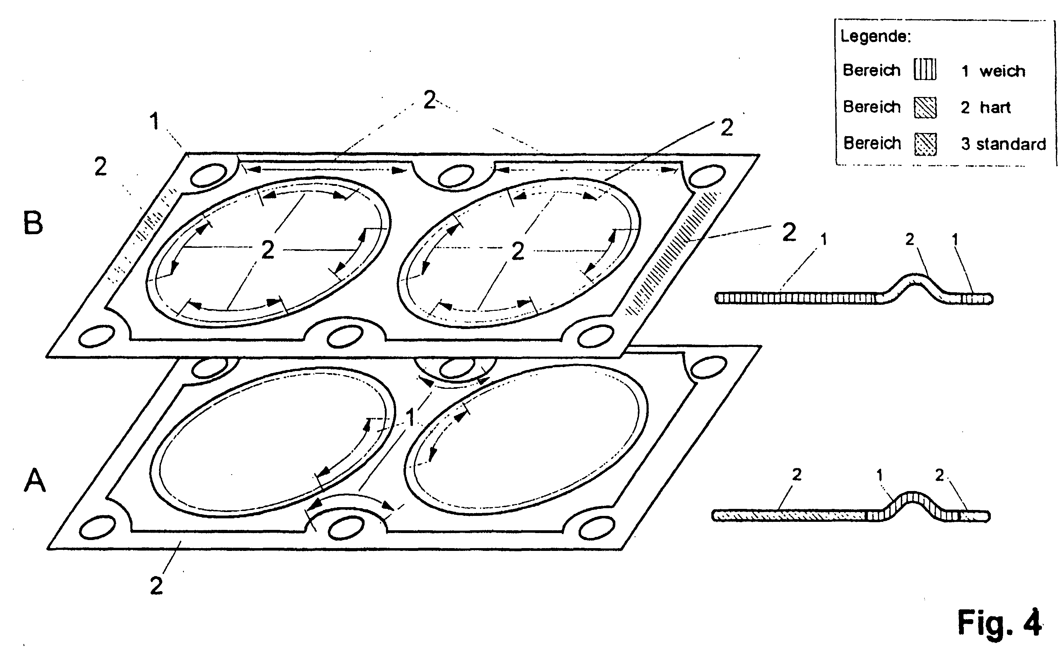

Fig. 4 zeigt in perspektivischer Anordnung zwei Ausführungsbeispiele von Dichtungen gemäß der Erfindung, und zwar jeweils für eine Zylinderkopfdichtung eines Zweizylindermotors. Diese im wesentlichen rechteckig ausgebildete Dichtung weist an den jeweiligen Zylindern Durchgangsöffnungen auf, um welche sich eine sickenartige Verformung erstreckt, welche entsprechend den Fig. 1 bis 3 ausgebildet sein kann. Diese dargestellten Ausführungsbeispiele sollen verdeutlichen, dass nicht nur einzelne Zonen 1 bis 3 der Dichtung bzw. der einzelnen Lagen der Dichtung im Querschnitt topographisch verteilte Zonen mit unterschiedlichen mechanischen Eigenschaften aufweisen, sondern dass beispielsweise bezüglich des Umfangs einer sickenartigen Verformung um eine Durchgangsöffnung im Verlauf variable mechanische Eigenschaften vorgesehen sein können.

Gemäß Fig. 4A besteht der Dichtungskörper aus einem Blech aus federhartem Material also der Zone 2, wohingegen Bereiche der sickenartigen Verformung Zonen aus weichem bzw. normalisiertem (Zone 1) oder Standardmaterial besteht. Je nachdem wie dicht die sickenartigen Verformungen bei einer Zweioder Mehrzylinderanordnung von Zylinderkopfdichtungen für Motoren zueinander angeordnet sind, d.h. wie dicht die Zylinderabstände gewählt sind, wird der Bereich der sickenartigen Verformung, in welchem sich die Kanten der Durchgangsöffnungen am nächsten sind, geringer als im übrigen Bereich des Umfangs der sickenartigen Verformung im Bereich der Durchgangsöffnung der Dichtung sein. Dadurch kann eine gleichmäßige Verspannung beim Anziehen des Zylinderkopfes auf dem Zylinderblock erzielt werden, d.h. die Anpresskräfte werden vergleichmäßigt.

Gemäß Fig. 4B ist ein Ausführungsbeispiel dargestellt, bei welchem die Dichtung aus einem weichen Blech entsprechend der Zone 1 besteht, wobei der Bereich der sickenartigen Verformung als Zone 2 aus gehärtetem oder hartem Material ausgebildet ist. Auch bei diesem Ausführungsbeispiel ist vorgesehen, dass die mechanischen Eigenschaften bzw. die Härte der sickenartigen Verformung über dem Umfang variiert bzw. dass einzelne Zonen 1, 2 mit unterschiedlichen mechanischen Eigenschaften verteilt über den Umfang der sickenartigen Verformung ausgebildet sind. Darüber hinaus können Bereiche der Dichtung Zonen mit ebenfalls unterschiedlichen mechanischen Eigenschaften aufweisen, welche im im wesentlichen flachen Bereich der Dichtung liegen.

Eine Gefügeveränderung im Sinne einer Aufhärtung bzw. auch im Sinne einer Normalisierung kann durch eine geeignete Führung einer Vorrichtung zur Erzielung der Aufhärtung erreicht werden. Eine Vorrichtung, mit welcher ein entsprechender Energieeintrag in das Material zur Erzielung einer Gefügeveränderung erreicht wird, ist beispielsweise ein Laser. Die Leistungsdichte des Lasers und der Weg des Lasers über die Oberfläche der Bereiche der Dichtung, in welchen Gefügeveränderungen erzielt werden sollen, wird in Abhängigkeit von dem Ausgangsmaterial der Metallagen der Dichtung, von deren Blechdicke, sowie von der zu erzielenden Tiefe der Gefügeveränderung über den Querschnitt der Metallage bestimmt.

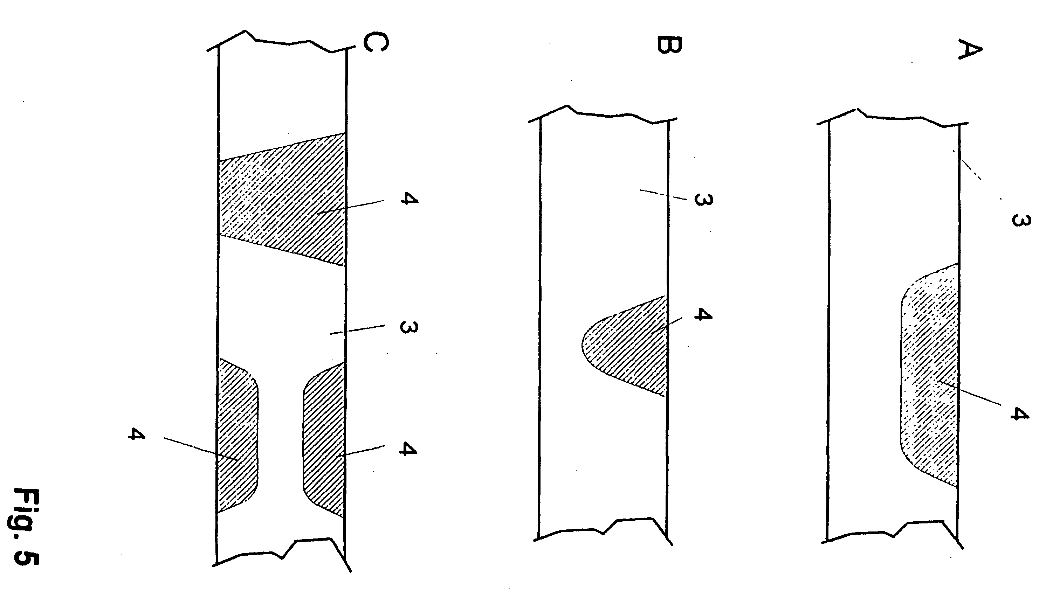

In Fig. 5 sind verschiedene Querschnitte dargestellt, welche die Art der Ausbildung der Zonen 3, 4 mit unterschiedlichen mechanischen Eigenschaften über dem Querschnitt der jeweiligen Metallagen zeigt.

In Fig. 5A ist eine Metallage aus Standardmaterial (Zone 3) dargestellt, in welche mittels Energieeinbringung eine sogenannte "Wärmeeinflusszone" 4 eingebracht ist. Der Bereich der Gefügeveränderung ist dabei als Oberflächenbereich ausgebildet.

Gemäß Fig. 5B ist die Wärmeeinflusszone 4 parabelförmig ausgebildet und erstreckt sich im wesentlichen über ca. zwei Drittel des Querschnitts des Standardmaterials der Zone 3 der Lage der Dichtung.

In Fig. 5C ist dargestellt, dass an verschiedenen Stellen des Querschnitts einer Lage aus Standardmaterial entsprechend der Zone 3 demgegenüber unterschiedlich ausgebildete Zonen mit einer Gefügeveränderung in Form von den genannten Wärmeeinflusszonen 4 ausgebildet sind. Diese Wärmeeinflusszonen 4 sind einerseits als eine sich über den gesamten Querschnitt, d.h. die gesamte Dicke der Lage der Dichtung erstreckende Zone ausgebildet, und sind andererseits als Oberflächenzonen mit geänderter Gefiigestruktur an der Oberseite und der Unterseite der Lage ausgebildet, wobei der mittlere Bereich der Lage unbeeinflusst bleibt. Durch eine derartige variable Anordnung der Zonen mit unterschiedlichen mechanischen Eigenschaften nicht nur an verschiedenen Orten der Dichtung, sondern auch über verschiedene Bereiche der Dicke bzw. des Querschnittes der Lage der Dichtung kann eine optimale Flexibilität der Dichtung im Hinblick auf eine Anpassung an verschiedene Material- und Dichtfunktionen sowie im Hinblick auf die Gewährleistung optimaler Dichtfunktionen und hoher Lebensdauer erzielt werden.

## Patentansprüche

1. Metallische Flachdichtung, insbesondere Zylinderkopfdichtung, mit mindestens einer eine sickenartige oder falzartige Verformung aufweisenden Lage aus Metall mit einer Durchgangsöffnung zum Dichten flächiger Bauteile,
**dadurch gekennzeichnet, dass**
die Dichtung topographisch verteilte Zonen (1 bis 4) mit durch Wärmebehandlung erzielt unterschiedlichen Gefügeausbildungen aufweist, wobei die Zonen (1 bis 4) in der Lage angeordnet sind.

2. Flachdichtung nach Anspruch 1, **dadurch gekennzeichnet, dass** die Zonen (1 bis 4) mit unterschiedlichen Gefügeausbildungen auf die jeweilige Steifigkeit der flächigen Bauteile abgestimmt sind.

3. Flachdichtung nach Anspruch 1 oder 2, **dadurch gekennzeichnet, dass** die Zonen (1 bis 4) unterschiedliche Festigkeiten aufweisen.

4. Flachdichtung nach Anspruch 3, **dadurch gekennzeichnet, dass** die Zonen (1 bis 4) mit unterschiedlichen Gefügeausbildungen an Stellen, an denen die flächigen Bauteile eine geringere Steifigkeit besitzen, eine größere Festigkeit und an Stellen, an denen die flächigen Bauteile eine größere Steifigkeit besitzen, eine geringere Festigkeit aufweisen.

5. Flachdichtung nach einem der Ansprüche 1 bis 4, **dadurch gekennzeichnet, dass** die Zonen (1 bis 4) unterschiedliche Härten aufweisen.

6. Flachdichtung nach einem der Ansprüche 1 bis 5, **dadurch gekennzeichnet, dass** die Dichtung einlagig ausgebildet ist.

7. Flachdichtung nach einem der Ansprüche 1 bis 5, **dadurch gekennzeichnet, dass** die Dichtung ein Laminat aus Lagen verschiedener Metallblechplatten ist.

8. Flachdichtung nach einem der Ansprüche 1 bis 7, **dadurch gekennzeichnet, dass** die Zonen (1 bis 3) mit unterschiedlichen Gefügeausbildungen im Bereich der sickenartigen Verformung vorgesehen sind.

9. Flachdichtung nach einem der Ansprüche 1 bis 7, **dadurch gekennzeichnet, dass** die Zonen (4) mit unterschiedlichen Gefügeausbildungen im Oberflächenbereich der Dichtung ausgebildet sind.

10. Flachdichtung nach einem der Ansprüche 1 bis 7, **dadurch gekennzeichnet, dass** die Zonen (4) mit unterschiedlicher Gefügeausbildungen über den gesamten Querschnitt der Dichtung ausgebildet sind.

11. Flachdichtung nach einem der Ansprüche 1 bis 10, **dadurch gekennzeichnet, dass** die sickenartige Verformung als Einfachsicke ausgebildet ist.

12. Flachdichtung nach einem der Ansprüche 1 bis 10, **dadurch gekennzeichnet, dass** die sickenartige Verformung als Doppelsicke, Umbördelung oder eine Kombination daraus ausgebildet ist.

13. Flachdichtung nach Anspruch 12, **dadurch gekennzeichnet, dass** Innenlagen einer mehrlagigen Dichtung Bereiche höherer und niedrigerer Festigkeit der sickenartigen Verformung parallel zu Außenlagen aufweisen.

14. Flachdichtung nach Anspruch 12, **dadurch gekennzeichnet, dass** Innenlagen einer mehrlagigen Dichtung Bereiche höherer und niedrigerer Festigkeit der sickenartigen Verformung aufweisen, deren Festigkeit allmählich oder gestuft zu den Festigkeiten von Außenlagen übergeht.

15. Flachdichtung nach einem der Ansprüche 1 bis 14, **dadurch gekennzeichnet, dass** der Werkstoff der Dichtung Kohlenstoffstahl, ferritischer Edelstahl, austenitischer Edelstahl, teilferritischer/austenitischer Edelstahl, Nichteisenmetall, gesintertes Metall, pulvermetallisches Material oder beschichtetes Metall ist.

16. Verfahren zur Herstellung einer metallischen Flachdichtung, insbesondere nach einem der Ansprüche 1 bis 15, mit mindestens einer Durchgangsöffnung, bei welchem die mindestens eine Metallage aufweisende Dichtung an unterschiedlichen Stellen thermisch behandelt wird, so dass in topographisch verteilten Zonen (1 bis 4) in der Metallage unterschiedliche Gefügeausbildungen erzeugt werden.

17. Verfahren nach Anspruch 16, bei welchem der zumindest einen Metallage der Dichtung vor einem Sicken thermisch eine geringere Festigkeit verliehen wird.

18. Verfahren nach Anspruch 16 oder 17, bei welchem die zumindest eine Metallage der Dichtung nach dem Sicken thermisch nachbehandelt wird.

19. Verfahren nach Anspruch 18, bei welchem die zumindest eine Metallage der Dichtung in den Zonen (1 bis 3) mit unterschiedlichen Gefügeausbildungen zur Erzielung einer Soll-Endhärte gehärtet wird.

20. Verfahren nach einem der Ansprüche 16 bis 19, bei welchem die Zonen (1 bis 4) thermisch unterschiedlich behandelt werden.

21. Verfahren nach einem der Ansprüche 16 bis 20, bei welchem die Zonen thermisch so behandelt werden, dass deren Festigkeit auf die Steifigkeit von mit der Dichtung abzudichtenden Bauteilen abgestimmt ist.

22. Verfahren nach Anspruch 17, bei welchem die zumindest eine Metallage der Dichtung sickenartig verformt wird, wobei eine erste innenliegende Sicke eine aufgehärtete Zone (2) aufweist, welche durch ein weiches Material umgeben ist, welches eine zweite Sicke aufweist, die bezüglich der Durchgangsöffnung hinter der ersten Sicke angeordnet und so auf gehärtet wird, dass Federelastizität erzielt wird.

23. Verfahren nach einem der Ansprüche 16 bis 22, bei welchem die zumindest eine Metallage der Dichtung im Bereich der Durchgangsöffnung thermisch behandelt wird.

24. Verfahren nach einem der Ansprüche 16 bis 23, bei welchem die Zonen (1 bis 4) mit unterschiedlichen Gefügeausbildungen mittels eines Lasers thermisch behandelt werden.

25. Verfahren nach einem der Ansprüche 16 bis 23, bei welchem die Zonen (1 bis 4) mit unterschiedlichen Gefügeausbildungen mit induktiv arbeitenden und/oder auf Basis von Mikrowellen, Elektronenstrahlen und/oder elektromagnetischen Strahlen arbeitenden Mitteln thermisch behandelt werden.

## Claims

1. Metallic flat gasket, in particular cylinder head gasket, with at least one layer which comprises a bead-like or fold-like deformation, consists of metal and has a through-opening, for sealing plane components,
**characterised in that**
the gasket comprises topographically divided zones (1 to 4) with different structural formations obtained through heat treatment, wherein the zones (1 to 4) are disposed in the layer.

2. Flat gasket according to Claim 1, **characterised in that** the zones (1 to 4) with different structural formations are adapted to the respective stiffness of the plane components.

3. Flat gasket according to Claim 1 or 2, **characterised in that** the zones (1 to 4) are of different strengths.

4. Flat gasket according to Claim 3, **characterised in that** the zones (1 to 4) with different structural formations are of a greater strength at places at which the plane components are of a lesser stiffness and of a lesser strength at places at which the plane components are of a greater stiffness.

5. Flat gasket according to any one of Claims 1 to 4, **characterised in that** the zones (1 to 4) are of different hardnesses.

6. Flat gasket according to any one of Claims 1 to 5, **characterised in that** the gasket is of single-layer formation.

7. Flat gasket according to any one of Claims 1 to 5, **characterised in that** the gasket is a laminate of layers of various sheet metal plates.

8. Flat gasket according to any one of Claims 1 to 7, **characterised in that** the zones (1 to 3) with different structural formations are provided in the region of the bead-like deformation.

9. Flat gasket according to any one of Claims 1 to 7, **characterised in that** the zones (4) with different structural formations are formed in the surface region of the gasket.

10. Flat gasket according to any one of Claims 1 to 7, **characterised in that** the zones (4) with different structural formations are formed over the entire cross section of the gasket.

11. Flat gasket according to any one of Claims 1 to 10, **characterised in that** the bead-like deformation is formed as a single bead.

12. Flat gasket according to any one of Claims 1 to 10, **characterised in that** the bead-like deformation is formed as a double bead, flanging or a combination thereof.

13. Flat gasket according to Claim 12, **characterised in that** inner layers of a multi-layer gasket comprise regions of a higher and lower strength of the bead-like deformation parallel to outer layers.

14. Flat gasket according to Claim 12, **characterised in that** inner layers of a multi-layer gasket comprise regions of a higher and lower strength of the bead-like deformation, the strength of which changes over to the strengths of outer layers gradually or in stepped fashion.

15. Flat gasket according to any one of Claims 1 to 14, **characterised in that** the material of the gasket is carbon steel, ferritic special steel, austenitic special steel, part-ferritic/austenitic special steel, non-ferrous metal, sintered metal, powder-metallic material or coated metal.

16. Method for producing a metallic flat gasket, in particular according to any one of Claims 1 to 15, with at least one through-opening, in which method the gasket, which comprises at least one metal layer, is thermally treated at different places, so that different structural formations are produced in topographically divided zones (1 to 4) in the metal layer.

17. Method according to Claim 16, in which the at least one metal layer of the gasket is thermally given a lesser strength before beading.

18. Method according to Claim 16 or 17, in which the at least one metal layer of the gasket is thermally aftertreated following beading.

19. Method according to Claim 18, in which the at least one metal layer of the gasket is hardened in the zones (1 to 3) with different structural formations in order to obtain a desired final hardness.

20. Method according to any one of Claims 16 to 19, in which the zones (1 to 4) are treated differently in thermal terms.

21. Method according to any one of Claims 16 to 20, in which the zones are thermally treated such that their strength is adapted to the stiffness of components which are to be sealed with the gasket.

22. Method according to Claim 17, in which the at least one metal layer of the gasket is deformed like a bead, wherein a first internal bead (2) comprises a hardened zone (2) which is surrounded by a soft material which comprises a second bead which is disposed after the first bead relative to the through-opening and is hardened so as to obtain spring elasticity.

23. Method according to any one of Claims 16 to 22, in which the at least one metal layer of the gasket is thermally treated in the region of the through-opening.

24. Method according to any one of Claims 16 to 23, in which the zones (1 to 4) with different structural formations are thermally treated by means of a laser.

25. Method according to any one of Claims 16 to 23, in which the zones (1 to 4) with different structural formations are thermally treated with inductively operating means and/or means operating on the basis of microwaves, electron beams and/or electromagnetic beams.

## Revendications

1. Joint d'étanchéité métallique plat, plus particulièrement un joint d'étanchéité pour tête cylindrique, avec au moins une couche métallique présentant une déformation en forme de moulure ou de pliage, avec une ouverture traversante, pour l'étanchéification d'éléments plats, **caractérisé en ce que** le joint d'étanchéité présente des zones réparties topographiquement (1 à 4) avec différentes textures obtenues par traitement thermique, moyennant quoi les zones (1 à 4) se trouvent dans la couche.

2. Joint d'étanchéité plat selon la revendication 1, **caractérisé en ce que** les zones (1 à 4), avec les différentes textures, sont adaptées à la rigidité des éléments plats.

3. Joint d'étanchéité plat selon la revendication 1 ou 2, **caractérisé en ce que** les zones (1 à 4) ont des résistances différentes.

4. Joint d'étanchéité plat selon la revendication 3, **caractérisé en ce que** les zones (1 à 4), avec les différentes textures, présentent une résistance plus importante aux endroits où les éléments plats présentent une résistance plus faible, et une résistance plus faible aux endroits où les éléments plats présentent une résistance plus importante.

5. Joint d'étanchéité plat selon l'une des revendications 1 à 4, **caractérisé en ce que** les zones (1 à 4) présentent des duretés différentes.

6. Joint d'étanchéité plat selon l'une des revendications 1 à 5, **caractérisé en ce que** le joint d'étanchéité est constitué d'une seule couche.

7. Joint d'étanchéité plat selon l'une des revendications 1 à 5, **caractérisé en ce que** le joint d'étanchéité est un laminé constitué de différentes couches de plaques métalliques.

8. Joint d'étanchéité plat selon l'une des revendications 1 à 7, **caractérisé en ce que** les zones (1 à 3) sont munies de différentes textures au niveau de la déformation en forme de moulure.

9. Joint d'étanchéité plat selon l'une des revendications 1 à 7, **caractérisé en ce que** les zones (4) comportent différentes textures au niveau de la surface du joint d'étanchéité.

10. Joint d'étanchéité plat selon l'une des revendications 1 à 7, **caractérisé en ce que** les zones (4) comportent différentes textures sur toute la section transversale du joint d'étanchéité.

11. Joint d'étanchéité plat selon l'une des revendications 1 à 10, **caractérisé en ce que** la déformation en forme de moulure est une simple moulure.

12. Joint d'étanchéité plat selon l'une des revendications 1 à 10, **caractérisé en ce que** la déformation en forme de moulure est une double moulure, un bord rabattu ou une combinaison des deux.

13. Joint d'étanchéité plat selon la revendication 12, **caractérisé en ce que** les couches internes d'un joint d'étanchéité à plusieurs couches comportent, parallèlement aux couches externes, des zones de la déformation en forme de moulure de résistance plus ou moins importante.

14. Joint d'étanchéité plat selon la revendication 12, **caractérisé en ce que** les couches internes d'un joint d'étanchéité à plusieurs couches comportent des zones de la déformation en forme de moulure de résistance plus ou moins importante, dont la résistance présente une transition progressive ou échelonnée vers les résistances des couches externes.

15. Joint d'étanchéité plat selon l'une des revendications 1 à 14, **caractérisé en ce que** le matériau du joint d'étanchéité est un acier au carbone, un acier inoxydable ferritique, un acier inoxydable austénitique, un acier inoxydable ferritique/austénitique, un métal non ferreux, un métal fritté, un matériau à poudre métallique ou un métal revêtu.

16. Procédé de fabrication d'un joint d'étanchéité métallique plat, plus particulièrement selon l'une des revendications 1 à 15, avec au moins une ouverture traversante, dans laquelle le joint d'étanchéité comportant une couche métallique est traité thermiquement à différents endroits, de telle sorte que différentes textures soient obtenues dans des zones réparties topographiquement (1 à 4) dans la couche métallique.

17. Procédé selon la revendication 16, dans lequel une résistance plus faible est conférée thermiquement à au moins une couche métallique du joint d'étanchéité avant le moulurage.

18. Procédé selon la revendication 16 ou 17, dans lequel au moins une couche métallique du joint d'étanchéité est traitée thermiquement après le moulurage.

19. Procédé selon la revendication 18, dans lequel au moins une couche métallique du joint d'étanchéité est durcie, dans les zones (1 à 3) de textures différentes, afin d'obtenir une dureté finale déterminée.

20. Procédé selon l'une des revendications 16 à 19, dans lequel les zones (1 à 4) sont traitées thermiquement de manière différente.

21. Procédé selon l'une des revendications 16 à 20, dans lequel les zones sont traitées thermiquement de telle sorte que leur résistance soit adaptée à la rigidité des éléments à étanchéifier avec le joint d'étanchéité.

22. Procédé selon la revendication 17, dans lequel au moins une couche métallique du joint d'étanchéité est déformée pour obtenir une moulure, moyennant quoi une première moulure interne comporte une zone durcie (2) entourée d'un matériau doux qui comporte une deuxième moulure disposée derrière la première moulure par rapport à l'ouverture traversante et durcie de façon à obtenir une certaine élasticité.

23. Procédé selon l'une des revendications 16 à 22, dans lequel au moins une couche métallique du joint d'étanchéité est traitée thermiquement au niveau de l'ouverture traversante.

24. Procédé selon l'une des revendications 16 à 23, dans lequel les zones (1 à 4), présentant des textures différentes, sont traitées thermiquement à l'aide d'un laser.

25. Procédé selon l'une des revendications 16 à 23, dans lequel les zones (1 à 4), présentant des textures différentes, sont traitées thermiquement avec des moyens fonctionnant de manière inductive et/ou avec des micro-ondes, des faisceaux d'électrons et/ou des faisceaux électromagnétiques.
